# EUROPÄISCHE PATENTSCHRIFT

(11) **EP 0 931 317 B1**
(45) Veröffentlichungstag und Bekanntmachung des Hinweises auf die Patenterteilung: **12.12.2001**
(21) Anmeldenummer: 97912038.3
(22) Anmeldetag: 02.10.1997
(51) Int. Cl.: G21C 17/022, G01N 1/10

(54) **VERFAHREN UND EINRICHTUNG ZUR GEWINNUNG EINER FLÜSSIGEN PROBE**
METHOD AND DEVICE FOR OBTAINING A FLUID SAMPLE
PROCEDE ET DISPOSITIF DE PRELEVEMENT D'UN ECHANTILLON LIQUIDE

(30) Priorität: 14.10.1996 DE 19642382
(43) Veröffentlichungstag der Anmeldung: 28.07.1999
(73) Patentinhaber: Framatome ANP GmbH, 91058 Erlangen (DE)
(72) Erfinder: ECKARDT, Bernd, D-63486 Bruchköbel (DE); FEUERBACH, Robert, D-65830 Kriftel (DE); BLASE, Michael, D-63538 Grosskrotzenburg (DE); BETZ, Richard, D-63683 Ortenberg (DE)
(74) Vertreter: Tergau & Pohl Patentanwälte
(86) Internationale Anmeldenummer: DE9702269
(87) Internationale Veröffentlichungsnummer: WO9816934

(56) Entgegenhaltungen:
- EP-A- 0 328 408
- EP-A- 0 419 994
- EP-A- 0 468 195
- EP-B- 0 598 789
- DE-A- 2 921 351
- US-A- 4 674 343
- US-A- 5 367 546

## Beschreibung

Die Erfindung betrifft ein Verfahren und eine Einrichtung zur Gewinnung einer flüssigen Probe aus dem Reaktorsicherheitsbehälter eines Kernkraftwerks mit Hilfe eines Probenahmegefäßes.

Auf dem Nukleargebiet stellt sich häufig die Aufgabe, ohne Beeinträchtigung der Festigkeit und Dichtheit eines Behälters von außen repräsentative flüssige Proben der im Behälter vorhandenen Flüssigkeit zu gewinnen. Diese Proben werden außerhalb des Behälters Messungen unterworfen, beispielsweise auf Radioaktivität. Bei der Probenahme sollten das Meßergebnis verfälschende Ablagerungen von Probenbestandteilen vermieden werden. Außerdem soll die Entnahme von Proben mit auch für Störfallbedingungen auslegbaren, vorzugsweise mechanisch passiven Komponenten ausführbar sein.

Bei der Entnahme von flüssigen Proben aus dem Inneren eines Reaktorsicherheitsbehälters eines Kernkraftwerks, insbesondere aus dessen Sumpf, stellen sich bei einem schweren Störfall oder Unfall erschwerte Bedingungen. Ein Ansaugen des Sumpfmediums kann aufgrund des eventuell hohen Dampfdrucks dieses Sumpfmediums sehr nachteilig sein. Und z.B. aus Gründen der Verfügbarkeit elektrischer Energie, wegen unzureichender Strahlenbeständigkeit, etc. kann der Betrieb einer Pumpe nicht ausreichend sichergestellt werden. Man muß hier also nach Wegen suchen, um auch unter diesen erschwerten Bedingungen eine sichere Probenahme zu gewährleisten.

Aus der EP 0 598 789 B1 sind ein Verfahren und eine Vorrichtung zur Gewinnung von Proben aus der Atmosphäre in einem gasdicht abgeschlossenen Behälter, insbesondere aus dem Reaktorsicherheitsbehälter eines Kernkraftwerks, bekannt. Hierbei wird die Probe in ein Probenehmer-Gefäß gefüllt, und in einem Transportfluid lösbare und/oder kondensierbare Bestandteile der Probe werden zusammen mit dem Transportfluid aus dem Reaktorsicherheitsbehälter ausgetragen. Anzumerken ist, daß das dort beschriebene Verfahren und die zugehörige Vorrichtung nicht für flüssige Proben, sondern für gasförmige Proben konzipiert sind.

Aufgabe der vorliegenden Erfindung ist es demnach, ein Verfahren und eine Einrichtung der eingangs genannten Art anzugeben, die für die Entnahme von flüssigen Proben konzipiert sind und auch unter den erwähnten erschwerten Bedingungen sicher arbeiten.

Bezüglich des Verfahrens wird die genannte Aufgabe erfindungsgemäß dadurch gelöst, daß mit Hilfe eines Druckpulses im Probenahmegefäß ein Gaspolster gebildet wird, das zur Beförderung mindestens eines Teils der im Probenahmegefäß befindlichen Flüssigkeit aus dem Reaktorsicherheitsbehälter heraus ausgenutzt wird.

Bevorzugt wird so vorgegangen, daß in einer vorgeschalteten ersten Phase vor der Aufgabe des Druckpulses Flüssigkeit aus dem Reaktorsicherheitsbehälter in das Probenahmegefäß eingebracht wird. Dies kann insbesondere dadurch geschehen, daß ein auf Unterdruck stehender Behälter mit dem Probenahmegefäß verbunden wird. Dann saugt der Behälter über die zugeschaltete Verbindungsleitung Flüssigkeit aus dem Reaktorsicherheitsbehälter in das Probenahmegefäß.

In der darauffolgenden zweiten Phase wird - wie erwähnt - mit Hilfe des Druckpulses im Probenahmegefäß das Gaspolster gebildet. Dies kann durch Öffnen eines unter Druck stehenden Reservoirs geschehen. Beispielsweise kann dieses Reservoir ein von einem Kompressor auf Druck gebrachter Behälter oder aber eine unter Eigendruck stehende Gasflasche sein.

Die Parameter des Druckpulses richten sich nach den örtlichen Gegebenheiten. Für übliche Auslegungen kann die Größe des Druckpulses einige bar, vorzugsweise 2 bis 5 bar, und kann die Dauer des Druckpulses einige Sekunden, vorzugsweise 20 bis 100 Sekunden, betragen.

In einer sich daran anschließenden dritten Phase, die auf die Aufgabe des Druckpulses folgt, kann das Gaspolster im Probenahmegefäß in einen auf Unterdruck stehenden Behälter entspannt werden. Dadurch wird mindestens ein Teil der im Probenahmegefäß befindlichen Flüssigkeit aus dem Probenahmegefäß in den Behälter gedrückt.

Die genannte Aufgabe bezüglich der Einrichtung wird erfindungsgemäß dadurch gelöst, daß das Probenahmegefäß im oberen Teil einen Gaspolster-Raum aufweist, der mit einem Druckpuls-Geber verbunden ist.

Eine bevorzugte Ausführungsform zeichnet sich dadurch aus, daß das Probenahmegefäß ein vorzugsweise zylindrisches Gefäß mit einer Flüssigkeits-Eintrittsöffnung im Bodenbereich und mit einer Gas-Durchtrittsöffnung im Deckenbereich sowie mit einer Bypass-Leitung zwischen dem Bodenbereich und einem außerhalb des Deckenbereichs gelegenen Anschluß ist.

Als Druckpuls-Geber kann ein mittels eines Ventils zu öffnendes Reservoir, beispielsweise ein von einem Kompressor auf Druck bringbarer Behälter oder aber eine Gasflasche, vorgesehen sein.

Der Druckpuls-Geber wird zweckmäßigerweise über eine in den Reaktordruckbehälter führende Leitung mit einer Gas-Durchtrittsöffnung im Deckenbereich des Probenahmegefäßes verbunden sein. Weiterhin kann ein auf Unterdruck bringbarer Behälter über eine Verbindungsarmatur an das Probenahmegefäß angeschlossen sein. Die beiden letztgenannten Ausführungsformen können vorteilhafterweise so miteinander kombiniert werden, daß nur eine einzige Durchführung im Reaktorsicherheitsbehälter benötigt wird.

An die Ausgänge des Behälters können weiterhin eine Flüssigkeitspumpe und ein Gaskompressor angeschlossen sein.

Ausführungsbeispiele der Erfindung werden im folgenden anhand von sieben Figuren näher erläutert. Es zeigen:
- FIG 1: eine Einrichtung zur Gewinnung einer flüssigen Probe, die mit der erfindungsgemäßen Druckpulstechnik arbeitet,
- FIG 2: einen Ausschnitt dieser Einrichtung in der ersten Phase, in der das Probenahmegefäß gefüllt wird,
- FIG 3: denselben Ausschnitt in der zweiten Phase, in der durch einen Druckpuls im Probenahmegefäß ein Förderdruck aufgebracht wird,
- FIG 4: denselben Ausschnitt, bei dem in der dritten Phase die Druckentlastung und eine Sumpfwasserförderung erfolgt,
- FIG 5: eine Prinzipskizze der Eintrittsöffnung des Probenahmegefäßes, die hier einen unstetigen Austritt und einen stetigen Eintritt aufweist,
- FIG 6: eine Prinzipskizze des Probenahmegefäßes mit einer vorgeschalteten zylindrischen Kammer in der Ansaugphase (geringer Widerstand),
- FIG 7: die in Figur 6 gezeigte Prinzipskizze in der Förderphase (hoher Widerstand).

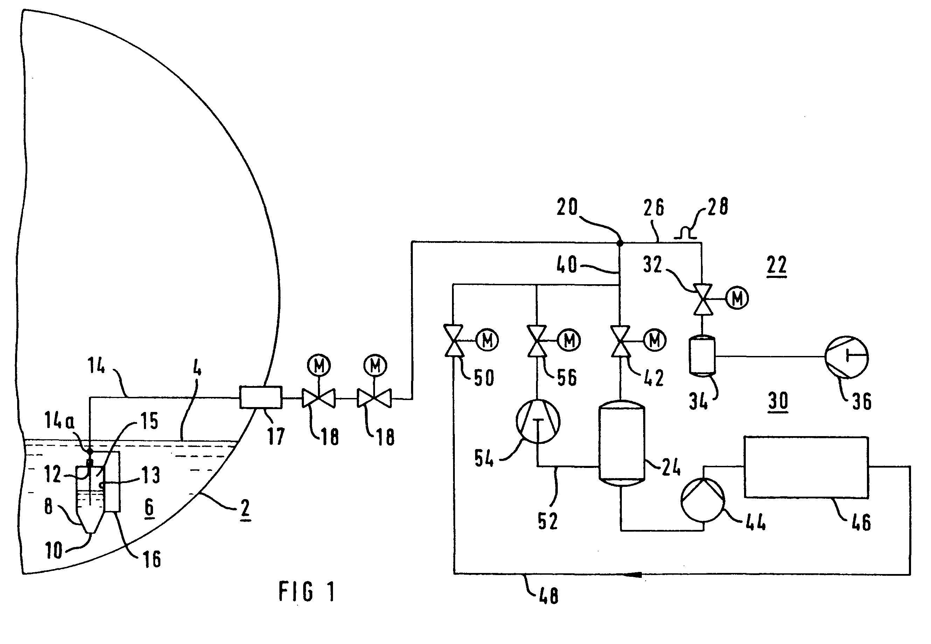

Die Einrichtung nach Figur 1 ist für den Reaktorsicherheitsbehälter 2 eines nicht näher dargestellten Kernkraftwerks konzipiert. Innerhalb dieses Reaktorsicherheitsbehälters 2 befindet sich ein Sumpf 4 aus einem flüssigen Sumpfmedium 6, insbesondere Wasser, das im Störfall mit Radioaktivität versetzt sein kann und diesbezüglich überwacht werden soll. Für diesen Zweck ist im Sumpf 4 ein Probenahmegefäß 8 angeordnet. Dieses ist vorliegend oben weitgehend zylindrisch und dann unten konisch ausgebildet. Es besitzt im Bodenbereich eine Flüssigkeits-Eintrittsöffnung 10 und im Deckenbereich eine Gas-Durchtrittsöffnung 12, wobei letztere mit einem Anschluß für eine Förderleitung 14 versehen ist. Von Bedeutung ist eine Bypass-Leitung 16, die zwischen dem Bodenbereich oder etwas darüber, wie dargestellt, und einem außerhalb des Dekkenbereichs gelegenen Verbindungspunkt 14a angeordnet ist. Im oberen Teil des Probenahmegefäßes 8 wird ein Gaspolsterraum 13 gebildet, der in einer gewissen Betriebsphase mit einem Gaspolster 15 (vorzugsweise aus Luft) gefüllt ist. Die Förderleitung 14 ist über eine die Wandung des Reaktorsicherheitsbehälters 2 durchdringende Durchführung 17 und zwei Abschluß-Armaturen 18 mit einer Verzweigungsstelle 20 verbunden.

An die Verzweigungsstelle 20 ist einerseits ein Druckpuls-Geber 22 und andererseits ein Behälter 24, der verschiedene Funktionen erfüllt, angeschlossen.

Auf der einen Seite erfolgt der Anschluß des Druckpuls-Gebers 22 über eine Druckpulsleitung 26, über die zeitgerecht Druckpulse in Richtung Reaktorsicherheitsbehälter 2 gegeben werden können. Ein solcher Druckpuls ist schematisch an der Druckpulsleitung 26 mit 28 bezeichnet. Der Druckpuls-Geber 22 besteht vorliegend aus einem Reservoir 30, das über ein Ventil 32 mit der Leitung 26 verbunden ist. Bei dem Reservoir 30 kann es sich um einen Behälter 34 handeln, der mittels eines Kompressors 36 auf Überdruck gebracht oder gehalten wird. Zur Druckerzeugung kann dabei Luft oder Stickstoff dienen. Es ist auch möglich, als Reservoir 30 eine entsprechende Gasflasche oder mehrere solcher Flaschen einzusetzen. Wichtig ist, daß das Ventil 32 ein schnell schaltendes Ventil ist.

Auf der anderen Seite der Verzweigungsstelle 20 liegt der Behälter 24 über eine Verbindungsleitung 40 und eine Verbindungsarmatur 42. Wie später deutlich wird, wirkt der Behälter 24 nicht nur als Sammel- oder Aufnahmegefäß für die flüssige Probe, sondern auch als Unterdruck-Geber. Der Behälter 24 ist mit einem ersten Ausgang über eine Flüssigkeitspumpe 44 an ein Analysengerät 46 angeschlossen. Dieses Analysengerät 46 dient der Probenverdünnung und Analyse. Insbesondere mißt es die in der Probe vorhandene Radioaktivität. Dessen Ausgang ist über eine Rückförderungsleitung 48 und ein Ventil 50 mit der Verbindungsleitung 40 und damit mit der Verzweigungsstelle 20 verbunden.

Ein zweiter Ausgang des Behälters 24 führt über eine Evakuierungsleitung 52 und einen Kompressor oder Verdichter 54 sowie über ein Ventil 56 ebenfalls an die Verbindungsleitung 40 und damit an die Verzweigungsstelle 20. Somit ist festzuhalten, daß sowohl der Druckpuls-Geber 22 mit Hilfe des Ventils 32 als auch der Behälter 24 mit Hilfe der Verbindungsarmatur 42 an die Förderleitung 14 anschließbar und damit mit dem Probenahmegefäß 8 verbindbar ist.

Zur Funktion der dargestellten Einrichtung ist folgendes zu sagen:

In einer Vorphase wird zunächst das im Sumpf 4 des Reaktorsicherheitsbehälters 2 ein- oder abgetauchte Probenahmegefäß 8 mit Druck beaufschlagt. Dies geschieht über die Förderleitung 14 und die Armaturen 18 sowie das Ventil 32 aus dem Druckpuls-Geber 22 mit Druckluft oder Stickstoff. Dadurch wird das Probenahmegefäß 8 entleert.

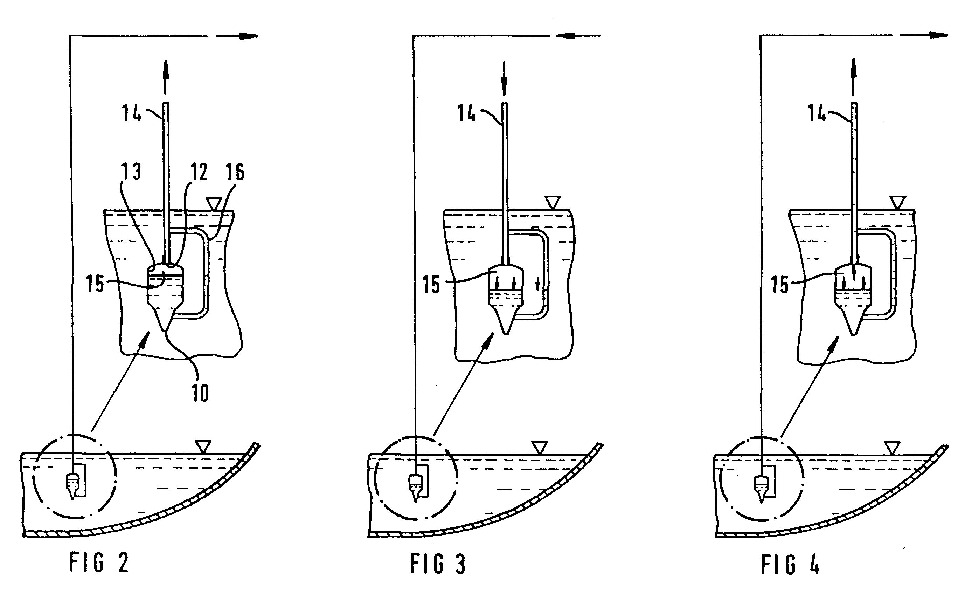

In der nun folgenden ersten Phase, die insbesondere in Figur 2 dargestellt ist, erfolgt die Füllung des Probenahmegefäßes 8. Dieses Probenahmegefäß 8 wird dadurch auf einen gegenüber dem Reaktorsicherheitsbehälter 2 geringeren Druck gebracht, daß die Verbindungsarmatur 42 zum Behälter 24, der einen niedrigeren Druck als im Reaktorsicherheitsbehälter 2 aufweist, geöffnet wird. Das Probenahmegefäß 8 wird dadurch mit Sumpfmedium 6 gefüllt.

Anschließend erfolgt in einer zweiten Phase die Aufbringung des Förderdrucks. Dazu wird das Probenahmegefäß 8 aus dem Behälter 34 über das schnell öffnende Ventil 32 kurzzeitig mit Gasdruck beaufschlagt. Es wird also vom Druckpuls-Geber 22 ein Druckpuls 28 abgegeben. Die Flüssigkeit im Probenahmegefäß 8 entweicht - bedingt durch den Gasdruck - durch die unten gelegene Eintrittsöffnung 10. Es erfolgt also eine Rückspülung in den Reaktorsicherheitsbehälter 2.

In der anschließenden dritten Phase findet die Druckentlastung und damit die Sumpfwasserförderung statt. In dieser Phase wird das sich in den Leitungen 14, 26 und 40 befindliche Gas schnell in den Behälter 24 entspannt, der zu diesem Zeitpunkt einen gegenüber dem Reaktorsicherheitsbehälter 2 niedrigeren Druck besitzt. Hierdurch wird über die Förderleitung 14, und zwar bedingt durch das Gaspolster 15 im Gaspolster-Raum 13 des Probenahmegefäßes 8, ein Teil der sich im Probenahmegefäß 8 befindenden Flüssigkeit über die Förderleitung 14 aus dem Reaktorsicherheitsbehälter 2 herausgefördert. Dieser Teil der Flüssigkeit gelangt als Probe in den Behälter 24. Sie kann einer Messung im Analysengerät 46 unterzogen werden.

Zur Vorbereitung einer weiteren Probenahme wird der Behälter 24 anschließend über den Kompressor oder Verdichter 54 evakuiert.

Mit der in Figur 1 dargestellten Einrichtung gelingt es, tiefer liegende und/oder siedende Flüssigkeiten mittels nur einer in der Durchführung 16 den Reaktorsicherheitsbehälter 2 durchdringenden Rohrleitung 14 zu beproben. Die Förderung über in der Anlage leicht zu realisierende Hochpunkte in den Leitungen 14, 26, 40 - unter Vermeidung von Ausdampfung - ist möglich.

Wichtig ist auch, daß das Einströmen der Probe in das Probenahmegefäß 8 von unten erfolgt. Dadurch können jeweils Sedimente ausgespült werden, und die nächste Probe wird nicht kontaminiert.

Der Förderleitungsdurchmesser wird in kleiner / gleich DN 10 gewählt, so daß durch die herrschende Oberflächenspannung eine Wasserpfropfenströmung erreicht und eine Entmischung in horizontalen Leitungsteilen in eine Zweiphasenströmung vermieden wird.

Vorteilhafte Ausführungsformen der Eintrittsöffnung 10 des Probenahmegefäßes 8 zur Reduzierung der in den Reaktorsicherheitsbehälter 2 zurückgespülten Flüssigkeitsmenge bestehen darin, daß diese Eintrittsöffnung 10 so ausgeführt ist, daß die Druckverluste in den beiden Strömungsrichtungen (beim Befüllen des Gefäßes 8 und beim Rückspülen in den Reaktorsicherheitsbehälter 2) verschieden sind.

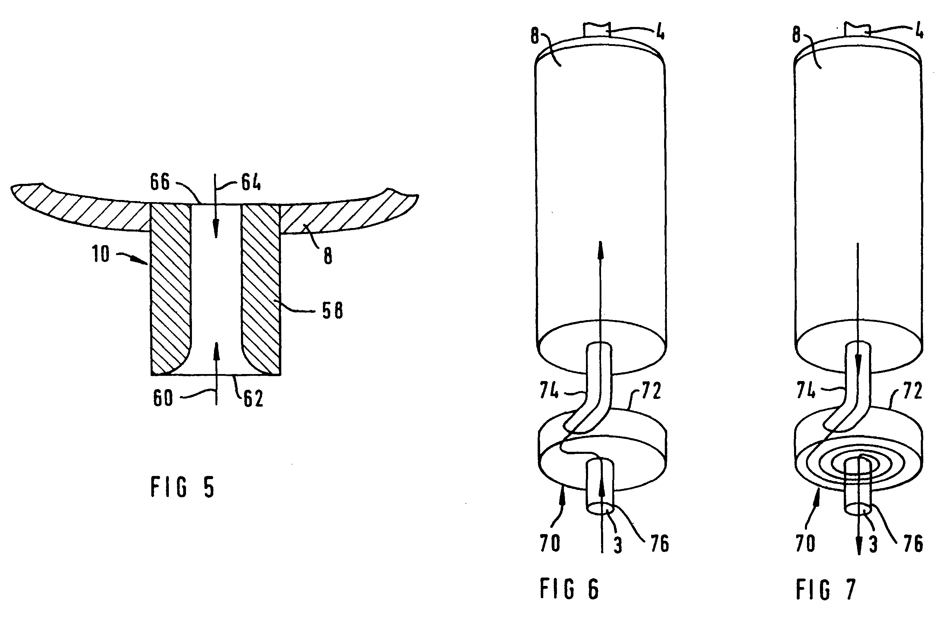

Figur 5 zeigt dabei eine Ausführungsform mit einem Stutzen 58. Dieser Stutzen 58 befindet sich am unteren Ende des Probenahmegefäßes 8. Er besitzt eine in Eintrittsrichtung 60 stetige Eintrittsöffnung 62 und eine in Austrittsrichtung 64 unstetige Eintrittsöffnung 66. Der Stutzen 58 wirkt also als ein einseitiger Durchflußbegrenzer. Hier ist der Druckverlustbeiwert der Eintrittsöffnung 62 in Eintrittsrichtung 60 um den Faktor 2 bis 3 niedriger als in Austrittsrichtung 64.

Besonders vorteilhaft ist die in den Figuren 6 und 7 gezeigte Ausstattung des Probenahmegefäßes 8 mit einem einseitigen Durchflußbegrenzer 70. Dieser besitzt in der Ansaugphase (Figur 6) einen geringen Widerstand und in der Förderphase (Figur 7) einen hohen Widerstand. Der Durchflußbegrenzer 70 besteht aus einer zylindrischen Kammer 72 mit einem tangentialen Anschlußstutzen 74 und einem axialen Anschlußstutzen 76.

Bei der Ansaugphase (vgl. Figur 6), d.h. beim Befüllen des Probenahmegefäßes 8, tritt das Sumpfmedium 6 durch den axialen Stutzen 76 ein, flutet die zylindrische Kammer 72 und tritt aus dieser über den tangentialen Stutzen 74 in das Probenahmegefäß 8 über. In dieser Richtung ist der Strömungswiderstand des Durchflußbegrenzers 70 gering. Er kann z.B. durch Diffusoren in den beiden Stutzen 74, 76 noch kleiner gehalten werden.

In der anschließenden Förderphase (vgl. Figur 7) wird, bedingt durch den tangentialen Einlauf über den Stutzen 74, in der zylindrischen Kammer 72 sowie im Austrittsstutzen 76 ein Wirbel mit entsprechend hohem Druckverlust ausgebildet. Aus der Literatur sind bei vergleichbaren Strömungsformen, z.B. bei der Staubabscheidung aus Gasen in Zyklonen, Druckverluste bekannt, die das Vielfache, z.B. das mehr als Fünfzigfache des Druckverlustes eines entsprechend durchströmten Rohrbogens betragen.

Die Installation des Durchflußbegrenzers 70 erfolgt vorzugsweise so, daß bei der ersten Druckbeaufschlagung eine Restentleerung ermöglicht wird, d.h. der axiale Anschlußstutzen 76 wird in vertikaler Richtung installiert.

Der Vorteil der Ausstattung des Probenahmegefäßes 8 mit dem Durchflußbegrenzer 70 nach den Figuren 6 und 7 besteht darin, daß die Zeitdauer der Förderphase bei unverändertem Querschnitt der Eintrittsöffnung wesentlich verlängert werden kann und somit auch die gesamte geförderte Menge an Sumpfmedium sowie die erreichbare Förderhöhe vergrößert wird.

## Patentansprüche

1. Verfahren zur Gewinnung einer flüssigen Probe aus dem Reaktorsicherheitsbehälter (2) eines Kernkraftwerks mit Hilfe eines Probenahmegefäßes (8),
**dadurch gekennzeichnet, daß** mit Hilfe eines Druckpulses (28) im Probenahmegefäß (8) ein Gaspolster (15) gebildet wird, das zur Beförderung mindestens eines Teils der im Probenahmegefäß (8) befindlichen Flüssigkeit (6) aus dem Reaktorsicherheitsbehälter (2) heraus ausgenutzt wird.

2. Verfahren nach Anspruch 1,
**dadurch gekennzeichnet, daß** vor Abgabe des Druckpulses (28) Flüssigkeit (6) aus dem Reaktorsicherheitsbehälter (2) in das Probenahmegefäß (8) eingebracht wird.

3. Verfahren nach Anspruch 2,
**dadurch gekennzeichnet, daß** zum Einbringen der Flüssigkeit (6) ein auf Unterdruck stehender Behälter (24) mit dem Probenahmegefäß (8) verbunden wird.

4. Verfahren nach einem der Ansprüche 1, 2 oder 3,
**dadurch gekennzeichnet, daß** der Druckpuls (28) durch Öffnen eines unter Druck stehenden Reservoirs (30), beispielsweise eines von einem Kompressor (36) auf Druck gebrachten Behälters (34) oder einer Gasflasche, erzeugt wird.

5. Verfahren nach einem der Ansprüche 1 bis 4,
**dadurch gekennzeichnet, daß** die Größe des Druckpulses (28) einige bar, vorzugsweise 2 bis 5 bar, und die Dauer des Druckpulses (28) einige Sekunden, vorzugsweise 20 bis 100 Sekunden, beträgt.

6. Verfahren nach einem der Ansprüche 1 bis 5,
**dadurch gekennzeichnet, daß** nach Abgabe des Druckpulses (28) das Gaspolster (15) im Probenahmegefäß (8) in einen auf Unterdruck stehenden Behälter (24) entspannt wird, wodurch mindestens ein Teil der im Probenahmegefäß (8) befindlichen Flüssigkeit (6) aus dem Probenahmegefäß (8) in diesen Behälter (24) gedrückt wird.

7. Einrichtung zur Gewinnung einer flüssigen Probe aus dem Reaktorsicherheitsbehälter (2) eines Kernkraftwerks mit Hilfe eines Probenahmegefäßes (8), insbesondere zur Durchführung des Verfahrens nach einem der Ansprüche 1 bis 6,
**dadurch gekennzeichnet, daß** das Probenahmegefäß (8) im oberen Teil einen Gaspolster-Raum (13) aufweist, der mit einem Druckpuls-Geber (22) verbunden ist.

8. Einrichtung nach Anspruch 7,
**dadurch gekennzeichnet, daß** das Probenahmegefäß (8) ein vorzugsweise zylindrisches Gefäß mit einer Flüssigkeits-Eintrittsöffnung (10) im Bodenbereich und mit einer Gas-Durchtrittsöffnung (12) im Deckenbereich sowie mit einer Bypassleitung (16) zwischen dem Bodenbereich und einem außerhalb des Deckenbereichs gelegenen Verbindungspunkt (14a) ist.

9. Einrichtung nach Anspruch 7 oder 8,
**dadurch gekennzeichnet, daß** der Druckpuls-Geber (22) ein mittels eines Ventils (32) zu öffnendes Reservoir (30), beispielsweise einen von einem Kompressor (36) auf Druck bringbaren Behälter (34) oder aber eine Gasflasche, umfaßt.

10. Einrichtung nach einem der Ansprüche 7 bis 9,
**dadurch gekennzeichnet, daß** der Druckpuls-Geber (22) über eine in den Reaktorsicherheitsbehälter (2) führende Leitung (14, 26) mit einer Gas-Durchtrittsöffnung (12) im Deckenbereich des Probenahmegefäßes (8) verbunden ist.

11. Einrichtung nach einem der Ansprüche 7 bis 10,
**dadurch gekennzeichnet, daß** ein auf Unterdruck bringbarer Behälter (24) über eine Verbindungsarmatur (40) an das Probenahmegefäß (8) angeschlossen ist.

12. Einrichtung nach Anspruch 11,
**dadurch gekennzeichnet, daß** an dem Ausgang des Behälters (24) ein Analysegerät (46) für Flüssigkeiten angeschlossen ist.

13. Einrichtung nach Anspruch 11 oder 12,
**dadurch gekennzeichnet, daß** an Ausgängen des Behälters (24) eine Flüssigkeitspumpe (44) und ein Gaskompressor (54) angeschlossen sind.

14. Einrichtung nach einem der Ansprüche 7 bis 13,
**dadurch gekennzeichnet, daß** an eine Gas-Durchtrittsöffnung (12) im Deckenbereich des Probenahmegefäßes (8) eine Förderleitung (14) angeschlossen ist, die zu einer Verzweigungsstelle (20) führt, an der eine Druckpulsleitung (26) und eine Verbindungsleitung (42) angeschlossen sind.

15. Einrichtung nach einem der Ansprüche 7 bis 14,
**dadurch gekennzeichnet, daß** die Flüssigkeits-Eintrittsöffnung (10) durch einen Stutzen (58) mit stetigem Eintritt (62) und unstetigem Austritt (66) gebildet wird.

16. Einrichtung nach einem der Ansprüche 7 bis 14,
**dadurch gekennzeichnet, daß** die Flüssigkeits-Eintrittsöffnung (10) gebildet wird durch eine hohle zylindrische Kammer (72) mit einem tangentialen Anschlußstutzen (74) und einem axialen Anschlußstutzen (76).

## Claims

1. Method for obtaining a fluid sample from the reactor containment (2) of a nuclear power station with the aid of a sampler vessel (8), **characterized in that** in the sampler vessel (8) with the aid of a pressure impulse (28) a gas cushion (15) is formed that is used to convey at least part of the fluid (6) that is located in the sampler vessel (8) out of the reactor containment (2).

2. Method according to claim 1, **characterized in that** before the pressure impulse (28) is delivered, fluid (6) is introduced into the sampler vessel (8) out of the reactor containment (2).

3. Method according to claim 2, **characterized in that** a container (24) that is at low pressure is connected to the sampler vessel (8) for the purpose of introducing the fluid (6).

4. Method according to one of claims 1, 2 or 3, **characterized in that** the pressure impulse (28) is generated by opening a reservoir (30), which is under pressure, for example a container (34), brought under pressure by a compressor (36), or a gas cylinder.

5. Method according to one of claims 1 to 4, **characterized in that** the magnitude of the pressure impulse (28) amounts to a few bar, preferably 2 to 5 bar, and the duration of the pressure impulse (28) amounts to a few seconds, preferably 20 to 100 seconds.

6. Method according to one of claims 1 to 5, **characterized in that** after the pressure impulse (28) has been delivered, the gas cushion (15) in the sampler vessel (8) expands into a container (24) that is at low pressure, whereby at least part of the fluid (6) that is located in the sampler vessel (8) is forced out of the sampler vessel (8) into this container (24).

7. Device for obtaining a fluid sample from the reactor containment (2) of a nuclear power station with the aid of a sampler vessel (8), in particular for carrying out the method according to one of claims 1 to 6, **characterized in that** the sampler vessel (8) has in the upper portion a gas-cushion chamber (13) which is connected to a pressure-impulse generator (22).

8. Device according to claim 7, **characterized in that** the sampler vessel (8) is a preferably cylindrical vessel with a fluid-inlet opening (10) in the base region and with a gas-passage opening (12) in the cover region and also with a by-pass line (16) between the base region and a connecting point (14a) that is situated outside the cover region.

9. Device according to claim 7 or 8, **characterized in that** the pressure-impulse generator (22) comprises a reservoir (30) which is to be opened by means of a valve (32), for example a container (34), which can be brought under pressure by a compressor (36), or else a gas cylinder.

10. Device according to one of claims 7 to 9, **characterized in that** the pressure-impulse generator (22) is connected to a gas-passage opening (12) in the cover region of the sampler vessel (8) by way of a line (14, 26) which leads into the reactor containment (2).

11. Device according to one of claims 7 to 10, **characterized in that** a container (24), which can be brought under low pressure, is connected to the sampler vessel (8) by way of a connection fitting (40).

12. Device according to claim 11, **characterized in that** an analyzer (46) for fluids is connected to the output of the container (24).

13. Device according to claim 11 or 12, **characterized in that** a fluid-pump (44) and a gas compressor (54) are connected to outputs of the container (24).

14. Device according to one of claims 7 to 13, **characterized in that** connected to a gas-passage opening (12) in the cover region of the sampler vessel (8) there is a conveyor line (14) which leads to a branch point (20) to which a pressure-impulse line (26) and a connection line (42) are connected.

15. Device according to one of claims 7 to 14, **characterized in that** the fluid-inlet opening (10) is formed by a connection piece (58) with a continuous inlet (62) and a discontinuous outlet (66).

16. Device according to one of claims 7 to 14, **characterized in that** the fluid-inlet opening (10) is formed by a hollow cylindrical chamber (72) with a tangential connection piece (74) and an axial connection piece (76).

## Revendications

1. Procédé de prélèvement d'un échantillon liquide de l'enceinte (2) de confinement d'un réacteur d'une centrale nucléaire à l'aide d'un récipient (8) de prise d'échantillon,
**caractérisé en ce qu'**il consiste à former à l'aide d'une impulsion (28) de pression, dans le récipient (8) de prise d'échantillon, un coussin (15) de gaz que l'on utilise pour transporter au moins une partie du liquide (6) se trouvant dans le récipient (8) de prise d'échantillon hors de l'enceinte (2) de confinement du réacteur.

2. Procédé suivant la revendication 1, **caractérisé en ce qu'**il consiste à introduire, avant l'émission de l'impulsion (28) de pression, du liquide (6) de l'enceinte (2) de confinement du réacteur dans le récipient (8) de prise d'échantillon.

3. Procédé suivant la revendication 2, **caractérisé en ce qu'**il consiste pour introduire le liquide (6) à mettre le récipient (8) de prise d'échantillon en communication avec une cuve (24) dans laquelle il règne une dépression.

4. Procédé suivant l'une des revendications 1, 2 ou 3, **caractérisé en ce qu'**il consiste à produire l'impulsion (28) de pression en ouvrant un réservoir (30) sous pression, par exemple une cuve mise sous pression par un compresseur (36) ou une bouteille de gaz.

5. Procédé suivant l'une des revendications 1 à 4, **caractérisé en ce que** la valeur de l'impulsion (28) de pression est de quelques bars, de préférence de 2 à 5 bar et la durée de l'impulsion (28) de pression est de quelques secondes, de préférence de 20 à 100 secondes.

6. Procédé suivant l'une des revendications 1 à 5, **caractérisé en ce qu'**il consiste, après l'émission de l'impulsion (28) de pression, à détendre le coussin (15) de gaz du récipient (8) de prise d'échantillon dans une cuve (24), dans laquelle règne une dépression, au moins une partie du liquide (6) se trouvant dans le récipient (8) de prise d'échantillon étant ainsi refoulée du récipient (8) de prise d'échantillon dans cette cuve (24).

7. Dispositif de prélèvement d'un échantillon liquide de l'enceinte (2) de confinement d'un réacteur d'une centrale nucléaire à l'aide d'un récipient (8) de prise d'échantillon, notamment pour la mise en oeuvre du procédé suivant l'une des revendications 1 à 6, **caractérisé en ce que** le récipient (8) de prise d'échantillon comporte, à la partie supérieure, une chambre (13) pour un coussin de gaz, qui communique avec un générateur (22) d'impulsions de pression.

8. Dispositif suivant la revendication 7, **caractérisé en ce que** le récipient (8) de prise d'échantillon est un récipient de préférence cylindrique ayant un orifice (10) d'entrée de liquide dans la partie du fond et un orifice (12) de passage du gaz dans la partie de sommet, ainsi qu'un conduit (16) de dérivation entre la partie de fond et un point (14a) de liaison se trouvant à l'extérieur de la partie de sommet.

9. Dispositif suivant la revendication 7 ou 8, **caractérisé en ce que** le générateur (22) d'impulsions de pression comprend un réservoir (30) pouvant s'ouvrir au moyen d'une vanne (32), par exemple une cuve (34) pouvant être mise sous pression par un compresseur (36), mais aussi une bouteille de gaz.

10. Dispositif suivant l'une des revendications 7 à 9, **caractérisé en ce que** le générateur (22) d'impulsions de pression communique par un conduit (14, 26) menant à l'enceinte (2) de confinement du réacteur avec un orifice (12) de passage du gaz ménagé dans la partie de sommet du récipient (8) de prise d'échantillon.

11. Dispositif suivant l'une des revendications 7 à 10, **caractérisé en ce qu'**une cuve (24) pouvant être mise sous dépression est raccordée au récipient (8) de prise d'échantillon par l'intermédiaire d'un robinet (40) de liaison.

12. Dispositif suivant la revendication 11, **caractérisé en ce qu'**un appareil (46) d'analyse du liquide est raccordé à la sortie de la cuve (24).

13. Dispositif suivant la revendication 11 ou 12, **caractérisé en ce qu'**une pompe (44) de liquide et un compresseur (54) de gaz sont raccordés aux sorties de la cuve (24).

14. Dispositif suivant l'une des revendications 7 à 13, **caractérisé en ce qu'**il est raccordé, à un orifice (12) de passage du gaz ménagé dans la partie de sommet du récipient (8) de prise d'échantillon, un conduit (14) de convoyage qui mène à un point (20) de bifurcation où un conduit (26) pour une impulsion de pression et un conduit (42) de liaison sont raccordés.

15. Dispositif suivant l'une des revendications 7 à 14, **caractérisé en ce que** l'orifice (10) d'entrée de liquide est formé par une tubulure (58) ayant une entrée (62) permanente et une sortie (66) qui n'est pas permanente.

16. Dispositif suivant l'une des revendications 7 à 14, **caractérisé en ce que** l'orifice (10) d'entrée de liquide est formé par une chambre (72) cylindrique creuse ayant une tubulure (74) tangentielle de raccordement et une tubulure (76) axiale de raccordement.
